# EUROPEAN PATENT SPECIFICATION

(11) **EP 1 397 825 B1**
(45) Date of publication and mention of the grant of the patent: **17.12.2008**
(21) Application number: 02727950.4
(22) Date of filing: 21.05.2002
(51) Int. Cl.: H01J 61/44

(54) **LIQUID CRYSTAL PICTURE SCREEN WITH WHITE LIGHT SOURCE**
FLÜSSIGKRISTALLBILDSHIR MIT WEISSLICHTQUELLE
ECRAN CINEMATOGRAPHIQUE A CRISTAUX LIQUIDES AVEC SOURCE DE LUMIERE BLANCHE

(30) Priority: 23.05.2001 DE 10125547
(43) Date of publication of application: 17.03.2004
(73) Proprietor: Koninklijke Philips Electronics N.V., 5621 BA Eindhoven (NL); Philips Intellectual Property & Standards GmbH, 20099 Hamburg (DE)
(72) Inventor: JUESTEL, Thomas, NL-5656 AA Eindhoven (NL); BECHTEL, Hans-Helmut, NL-5656 AA Eindhoven (NL); BERTRAM, Dietrich, NL-5656 AA Eindhoven (NL)
(74) Representative: Volmer, Georg
(86) International application number: PCT/IB2002/001820
(87) International publication number: WO 2002/095791

(56) References cited:
- US-A- 5 525 860
- US-B1- 6 222 312
- PATENT ABSTRACTS OF JAPAN vol. 2002, no. 04, 4 August 2002 (2002-08-04) & JP 2001 351579 A (HARISON TOSHIBA LIGHTING CORP), 21 December 2001 (2001-12-21)
- DATABASE WPI Section Ch, Week 199113 Derwent Publications Ltd., London, GB; Class L03, AN 1991-089814 XP002205144 & JP 03 033186 A (MATSUSHITA ELECTRONICS CORP), 13 February 1991 (1991-02-13)
- SHIONOYA S.; YEN W.M.: 'PHOSPHOR HANDBOOK, Chapter five - section six (pages 389-394)', 1999, CRC PRESS LLC, BOCA RATON (UNITED STATES) * tables 10,11,10a *

## Description

The invention relates to a liquid crystal picture screen provided with a background lighting system with a white light source which comprises a phosphor layer with a combination of phosphors which emit red, green, and blue light. The invention further relates to a background lighting system and to a white light source.

Liquid crystal picture screens are passive display systems, i.e. they do not themselves emit light. These picture screens are based on the principle that light either does or does not pass through the layer of liquid crystals. This means that an external light source is necessary for generating a picture. In reflective liquid crystal picture screens, the ambient light is used as the external light source. Artificial light is generated in a background lighting system in the case of transmissive liquid crystal picture screens.

To create a colored picture with the liquid crystal picture screen, the front plate of the liquid crystal picture screen comprises color filters in a pixel arrangement, which filters generate the three primary colors red, green, and blue from the white light of the background lighting system.

Background lighting systems may comprise mercury discharge lamps, so-called cold-cathode lamps, or xenon discharge lamps as their light sources. The lamps are given a phosphor layer of red-, green-, and blue-emitting phosphors so as to achieve that the light emitted by the light source will be white.

WO 99/34389, for example, discloses a white light source with a phosphor layer of red-, green-, and blue-emitting phosphors which comprises (Y,Gd)BO₃:Eu, BaMgAl₁₀O₁₇:Eu,Mn and LaPO₄:Ce,Tb.

Whereas the blue-emitting phosphor BaMgAl₁₀O₁₇:Eu,Mn has a saturated color point with x = 0.148 and y = 0.065, and its emission wavelength is optimally attuned to the blue color filter, the red-emitting phosphor (Y,Gd)BO₃:Eu has a color point with x = 0.640 and y = 0.352 whose x-value is too low for video applications. The result is that overall fewer colors distinguishable to a viewer can be displayed by the liquid crystal picture screen. In particular deeply saturated red colors cannot be displayed. A further disadvantage of (Y,Gd)BO₃:Eu is that a considerable portion of the emitted red light is absorbed by the red color filter (Tₘₐₓ > 610 nm), whereby the brightness of the liquid crystal picture screen is reduced. This is true in particular with the use of (Y,Gd)BO₃:Eu in a xenon discharge lamp, because the emission wavelength of (Y,Gd)BO₃:Eu lies at 595 nm therein.

The green-emitting phosphor LaPO₄ Ce, Tb has the disadvantage that besides the main emission wavelength of 545 nm it has three further emission lines at 489, 586, and 622 nm. These further emissions detract from the color saturation of the main emission at 545 nm.

It is accordingly an object of the invention to counteract the disadvantages of the prior art and to provide a liquid crystal picture screen with an improved background lighting.

This object is achieved by means of a liquid crystal picture screen provided with a background lighting system with a white light source which comprises a phosphor layer with a combination of phosphors which emit red, green, and blue light, wherein said combination is chosen from the group of:
BaMgAl₁₀O₁₇:Eu,Mn/LaPO₄:Ce,Tb/YVO₄:Eu,
BaMgAl₁₀O₁₇:Eu,Mn/Zn₂SiO₄:Mn LaPO₄:Ce,Tb/YVO₄:Eu, and
BaMgAl₁₀O₁₇:Eu,Mn/ (Y,Gd)BO₃:Tb/YVO₄:Eu.

The use of one of the combinations according to the invention renders it possible to obtain a liquid crystal picture screen which has a higher luminous efficacy because the emission spectra of the phosphors are adapted to the transmission curves of the respective color filters, so that less light is absorbed by the color filters. Furthermore, the liquid crystal picture screen shows an improved color saturation in the display of red and green colors, because the white light source emits more saturated primary colors. It is important in particular for liquid crystal picture screens that the primary colors should be saturated, because the white light of the light source will be split up into the primary colors again by the color filters. As a result, the liquid crystal picture screen has a widened color space which can be displayed.

It is advantageous when the white light source is a gas discharge lamp.

The use of a gas discharge lamp in a liquid crystal picture screen is particularly advantageous because it generates a homogeneous quantity of light.

The invention further relates to a background lighting system with a white light source and to a white light source which comprises a phosphor layer with a combination of phosphors which emit red, green, and blue light, said combination being chosen from the group of:
BaMgAl₁₀O₁₇:Eu,Mn/LaPO₄;Ce,Tb/YVO₄:Eu,
BaMgAl₁₀O₁₇:Eu,Mn/Zn₂SiO₄:Mn LaPO₄:Ce,Tb/YVO₄:Eu, and
BaMgAl₁₀O₁₇:Eu,Mn/ (Y,Gd)BO₃:Tb/YVO₄:Eu.

The invention will be explained in more detail below with reference to a Figure and three embodiments, with:

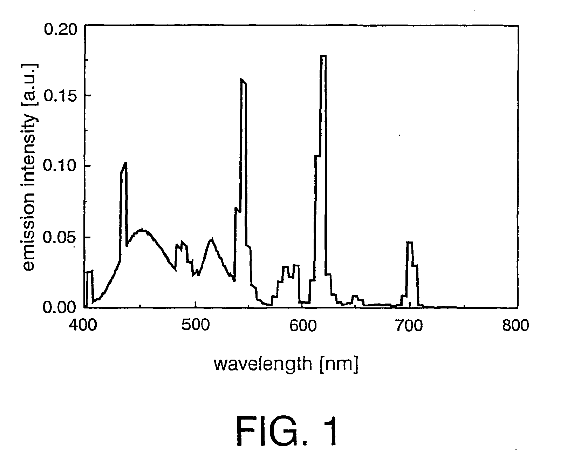

Fig.1 showing the emission spectrum of a gas discharge lamp according to the invention.

A liquid crystal picture screen usually comprises a liquid crystal unit and a background lighting system. The liquid crystal unit comprises a first and a second polarizer as well as a liquid crystal cell which has two transparent plates, each supporting a matrix of light-transmitting electrodes. A liquid crystal material is located between the two transparent plates. The liquid crystal material comprises, for example, TN (twisted nematic) liquid crystals, STN (super twisted nematic) liquid crystals, DSTN (double super twisted nematic) liquid crystals, FSTN (foil super twisted nematic) liquid crystals, VAN (vertically aligned) liquid crystals, or OCB (optically compensated bend) liquid crystals. The liquid crystal cell is sandwiched between the two polarizers, the second polarizer being visible to the viewer.

The background lighting system may be, for example, a direct-lit background lighting system or a side-lit background lighting system, comprising an optical waveguide and an output coupling structure.

The background lighting system comprises a white light source which is usually accommodated in a housing, the latter preferably having a reflector on its inside. The background lighting system may furthermore comprise a diffuser plate.

To generate and display colored images, the liquid crystal unit is provided with a color filter. The color filter comprises pixels in a mosaic pattern, each pixel transmitting either red, green, or blue light. The color filter is preferably arranged between the first polarizer and the liquid crystal cell.

The white light source, which is preferably a gas discharge lamp, preferably emits white or substantially white light. The gas discharge lamp may be, for example, a mercury discharge lamp or a xenon discharge lamp.

Many constructions are possible in principle for a gas discharge lamp. In a preferred construction, the xenon gas discharge lamp comprises a cylindrical lamp vessel of glass filled with a xenon-containing gas, while a pair of strip-shaped electrodes is arranged on the outer wall of said vessel so as to be electrically insulated from one another. The stripshaped electrodes extend over the entire length of the lamp vessel, lying opposite one another with their longitudinal sides, leaving free two voids. In an alternative preferred construction, the xenon discharge lamp has a rectangular lamp vessel of two parallel glass plates which are each covered with a phosphor layer. The electrodes are present on a glass plate.

The white light source comprises a phosphor layer with a combination of red-, green-, and blue-emitting phosphors. The phosphor layer preferably comprises:
BaMgAl₁₀O₁₇:Eu,Mn/LaPO₄:Ce,Tb/YVO₄:Eu,
BaMgAl₁₀O₁₇:Eu,Mn/Zn₂SiO₄;Mn LaPO₄:Ce,Tb/YVO₄:Eu, and
BaMgAl₁₀O₁₇;Eu,Mn/ (Y,Gd)BO₃:Tb/YVO₄:Eu.

The combinations BaMgAl₁₀O₁₇:Eu,Mn/LaPO₄:Ce,Tb/YVO₄:Eu,
BaMgAl₁₀O₁₇:Eu,Mn/Zn₂SiO₄:Mn LaPO₄:Ce,Tb/YVO₄:Eu, and
BaMgAl₁₀O₁₇:Eu,Mn/ (Y,Gd)BO₃:Tb/YVO₄:Eu are particularly suitable for use in a mercury discharge lamp and supply white light which is composed of more saturated primary colors.

TheYVO₄:Eu used in the combination of
BaMgAl₁₀O₁₇:Eu,Mn/LaPO4:Ce,Tb/YVO₄:Eu, is a red-emitting phosphor whose main emission wavelength lies at 620 nm and is accordingly better attuned to the transmission behavior of the red color filter. The color point of YVO_{4:}Eu with x = 0.658 and y = 0.362 is also better situated than that of (Y,Gd)BO₃:Eu. A further advantage of this phosphor combination is that BaMgAl₁₀O₁₇:Eu, Mn has a further emission in the green region, at 515 nm, in addition to a blue emission at 450 nm.

Two green-emitting phosphors are advantageously utilized in the combination BaMgAl₁₀O₁₇:Eu/Zn₂SiO₄ :Mn/LaPO₄:Ce,Tb/YVO₄:Eu so as to obtain an improved color saturation of the green light.

It is advantageous with the use of a phosphor combination comprising Zn₂SiO₄:Mn if the manganese content is > 4%. The emission wavelength of Zn2SiO₄:Mn is dependent on the manganese content and lies above 530 nm for a manganese content above 4%.

The combination BaMgAl₁₀O₁₇:Eu,Mn/(Y,Gd)BO₃:Tb/YVO₄:Eu is particularly suitable for use in xenon discharge lamps. (Y,Gd)BO₃:Tb has an emission maximum at 544 nm and shows no further emission lines which reduce the color saturation on account of the different crystal lattice of the phosphor (Y,Gd)BO₃.

Suitable manufacturing processes for a phosphor layer with a combination of red-, green-, and blue-emitting phosphors on a wall of the discharge vessel are dry coating processes such as, for example, electrostatic deposition or electrostatically supported dusting as well as a wet coating process such as, for example, dipping or spraying.

In the case of wet coating processes, the respective phosphors are dispersed in water, an organic solvent, possibly together with a dispersing agent, a surfactant, and an antifoaming agent, or a binder preparation. Suitable binder preparations comprise organic or inorganic binders which can withstand an operating temperature of 250 °C without decomposition, brittling, or discoloration.

The combination of phosphors may be provided, for example, on the inner side of a lamp vessel in a flow coating process. The coating suspensions for the flow coating process comprise water or an organic compound such as butyl acetate as the solvent. The suspension is stabilized by means of additives such as stabilizers, liquidizers such as cellulose derivatives, and are influenced as to their rheological properties. The suspension of the phosphor combination is provided as a thin layer on the inner side of a lamp vessel, is dried, and is baked out at temperatures around 600°C.

It may also be preferred that the phosphor combination for the phosphor layer is electrostatically deposited on the inner side of the lamp vessel or on a glass plate.

Embodiments of the invention will be discussed in more detail below, representing examples of how the invention may be realized in practice.

### Embodiment 1,

10% by weight of BaMgAl₁₀O₁₇:Eu) 45% by weight of (Y,Gd)BO₃:Tb, and 45% by weight of YVO₄:Eu were suspended in butyl acetate. Nitrocellulose as a binder and Al₂O₃ as an adhesion promoter were added to the suspension.

Two glass plates of 3 mm thickness were subsequently coated with this suspension such that a coating weight of 3 mg cm⁻² was obtained after drying. Drying took place in that the coated plates were thermally treated for 10 minutes at 580 °C.

The glass plates were interconnected by means of spacers and sealed off at the edges. The inner space thus created was evacuated and filled with 300 mbar xenon.

Electrodes of Al were provided on a glass plate through adhesion of foils with Al vapor-deposited thereon. The gas discharge lamp was incorporated in a background lighting system of a liquid crystal picture screen. The white color point of the gas discharge lamp was at x = 0.326 and y = 0.321. The color temperature T was 5900 K.

### comparative embodiment 2

First a suspension of 45.4% by weight of BaMgAl₁₀O₁₇:Eu,Mn, 39.3% by weight of GdMgB₅O₁₀:Ce,Tb,Mn, and 15.2% by weight of Y₂O₃:Eu in butylacetate was prepared. Nitrocellulose as a binder and Al₂O₃ as an adhesion promoter were added to the suspension.

The inner side of a glass tube having a diameter of 5 mm was coated with the phosphor suspension in a flow coating process. A coating weight of 3 mg cm⁻² was obtained after a thermal treatment of 10 minutes at 580 °C. Then electrodes of A1 were sealed into the coated glass tube. The glass tube was evacuated and filled with 20 mbar mercury.

The gas discharge lamp was incorporated in a background lighting system of a liquid crystal picture screen. The white color point of the gas discharge lamp was at x = 0.295 and y = 0.305. The color temperature T was 8000 K.

### Embodiment 3

First a suspension of 42.5% by weight of BaMgAl₁₀O₁₇:Eu,Mn, 25.3% by weight of LaPO₄:Ce,Tb, and 32.2% by weight of YVO₄:Eu in butylacetate was prepared. Nitrocellulose as a binder and Al₂O₃ as an adhesion promoter were added to the suspension.

The inner side of a glass tube having a diameter of 5 mm was coated with the phosphor suspension in a flow coating process. A coating weight of 3 mg cm⁻² was obtained after a thermal treatment of 10 minutes at 580 °C. Then electrodes of Al were sealed into the coated glass tube. The glass tube was evacuated and filled with 20 mbar mercury.

The gas discharge lamp was incorporated in a background lighting system of a liquid crystal picture screen. The color temperature T was 8000 K. Fig. 1 shows the emission spectrum of the gas discharge lamp.

## Claims

1. A liquid crystal picture screen provided with a background lighting system with a white light source which comprises a phosphor layer with a combination of phosphors which emit red, green, and blue light, wherein said combination is chosen from the group of:
BaMgAl₁₀O₁₇:Eu,Mn/LaPO₄:Ce,Tb,Mn/YVO₄:Eu,
BaMgAl₁₀O₁₇:Eu,Mn/Zn₂SiO₄:Mn/LaPO₄:Ce,Tb/YVO₄:Eu, and
BaMgAl₁₀O₁₇:Eu,Mn/(Y,Gd)BO₃:Tb/YVO₄:Eu.

2. A liquid crystal picture screen as claimed in claim1 **characterized in that** the white light source is a gas discharge lamp.

3. A background lighting system with a white light source which comprises a phosphor layer with a combination of phosphors which emit red, green, and blue light, said combination being chosen from the group of:
BaMgAl₁₀O₁₇:Eu,Mn/LaPO₄:Ce,Tb,Mn/YVO₄:Eu,
BaMgAl₁₀O₁₇:Eu,Mn/Zn₂SiO₄:Mn/LaPO₄:Ce,Tb/YVO₄:Eu, and
BaMgAl₁₀O₁₇:Eu,Mn/(Y,Gd)BO₃:Tb/YVO₄:Eu.
4. A white light source for a background lighting system, which comprises a phosphor layer with a combination of phosphors which emit red, green, and blue light, said combination being chosen from the group of:
BaMgAl₁₀O₁₇:Eu,Mn/LaPO₄:Ce,Tb,Mn/YVO₄:Eu,
BaMgAl₁₀O₁₇:Eu,Mn/Zn₂SiO₄:Mn/LaPO₄:Ce,Tb/YVO₄:Eu, and
BaMgAl₁₀O₁₇:Eu,Mn/(Y,Gd)BO₃:Tb/YVO₄:Eu,

## Patentansprüche

1. Flüssigkristallbildschirm, ausgestattet mit einem Hintergrundbeleuchtungssystem mit einer weißen Lichtquelle, welche eine Leuchtstoffschicht mit einer Kombination aus Leuchtstoffen, die rotes, grünes und blaues Licht emittieren, umfasst, wobei die Kombination aus der Gruppe
BaMgAl₁₀O₁₇:Eu,Mn/LaPO₄:Ce,Tb/YVO₄:Eu,
BaMgAl₁₀O₁₇:Eu,Mn/Zn₂SiO₄:Mn/LaPO₄:Ce,Tb/YVO₄:Eu und
BaMgAl₁₀O₁₇:Eu,Mn/(Y,Gd)BO₃:Tb/YVO₄:Eu ausgewählt ist.

2. Flüssigkristallbildschirm nach Anspruch 1, **dadurch gekennzeichnet, dass** die weiße Lichtquelle eine Gasentladungslampe ist.

3. Hintergrundbeleuchtungssystem mit einer weißen Lichtquelle, welche eine Leuchtstoffschicht mit einer Kombination aus Leuchtstoffen, die rotes, grünes und blaues Licht emittieren, umfasst, wobei die Kombination aus der Gruppe
BaMgAl₁₀O₁₇:Eu,Mn/LaPO_{4:}Ce,Tb/YVO₄:Eu,
BaMgAl₁₀O₁₇:Eu,Mn/Zn₂SiO₄:Mn/LaPO₄:Ce,Tb/YVO₄:Eu und
BaMgAl₁₀O₁₇:Eu,Mn/(Y,Gd)BO₃:Tb/YVO_{4:}Eu ausgewählt ist.

4. Weiße Lichtquelle für ein Hintergrundbeleuchtungssystem, welche eine Leuchtstoffschicht mit einer Kombination aus Leuchtstoffen, die rotes, grünes und blaues Licht emittieren, umfasst, wobei die Kombination aus der Gruppe
BaMgAl₁₀O₁₇:Eu,Mn/LaPO_{4:}Ce,Tb/YVO₄:Eu,
BaMgAl₁₀O₁₇:Eu,Mn/Zn₂SiO₄:Mn/LaPO₄:Ce,Tb/YVO₄:Eu und
BaMgAl₁₀O₁₇:Eu,Mn/(Y,Gd)BO₃:Tb/YVO₄:Eu ausgewählt ist.

## Revendications

1. Ecran d'image à cristaux liquides étant pourvu d'un système d'éclairage de fond avec une source lumineuse blanche qui comprend une couche de phosphore avec une combinaison de phosphores qui émettent une lumière rouge, verte et bleue, dans lequel ladite combinaison est choisie parmi le groupe constitué de:
BaMgAl₁₀O₁₇:Eu,Mn /LaPO₄:Ce,Tb,Mn/YVO₄:Eu,
BaMgAl₁₀O₁₇:Eu,Mn/Zn₂SiO₄:Mn/LaPO₄:Ce,Tb/YVO₄:Eu, et
BaMgAl₁₀O₁₇:Eu,Mn/(Y,Gd)BO₃:Tb/YVO₄:Eu.

2. Ecran d'image à cristaux liquides selon la revendication 1, **caractérisé en ce que** la source lumineuse blanche est une lampe à décharge à gaz.

3. Système d'éclairage de fond avec une source lumineuse blanche qui comprend une couche de phosphore avec une combinaison de phosphores qui émettent une lumière rouge, verte et bleue, ladite combinaison étant choisie parmi le groupe constitué de:
BaMgAl₁₀O₁₇:Eu,Mn/LaPO₄:Ce,Tb,Mn/YVO₄:Eu,
BaMgAl₁₀O₁₇:Eu,Mn/Zn₂SiO₄:Mn/LaPO₄:Ce,Tb/YVO₄:Eu, et
BaMgAl₁₀O₁₇:Eu,Mn/(Y,Gd)BO₃:Tb/YVO₄:Eu.

4. Source lumineuse blanche pour un système d'éclairage de fond qui comprend une couche de phosphore avec une combinaison de phosphores qui émettent une lumière rouge, verte et bleue, ladite combinaison étant choisie parmi le groupe constitué de:
BaMgAl₁₀O₁₇:Eu,Mn /LaPO₄:Ce,Tb,Mn/YVO₄:Eu,
BaMgAl₁₀O₁₇:Eu,Mn/Zn₂SiO₄:Mn/LaPO₄:Ce,Tb/YVO₄:Eu, et
BaMgAl₁₀O₁₇:Eu,Mn/(Y,Gd)BO₃:Tb/YVO₄:Eu.
